# EUROPÄISCHE PATENTSCHRIFT

(11) **EP 3 590 632 B1**
(45) Veröffentlichungstag und Bekanntmachung des Hinweises auf die Patenterteilung: **17.03.2021**
(21) Anmeldenummer: 19184799.5
(22) Anmeldetag: 05.07.2019
(51) Int. Cl.: B22F 5/04, F01D 5/14, F01D 5/16, B22F 3/105, B33Y 80/00

(54) **SCHAUFELANORDNUNG FÜR EINE GASTURBINE UND VERFAHREN ZUM HERSTELLEN DER SCHAUFELANORDNUNG**
BLADE ASSEMBLY FOR A GAS TURBINE AND METHOD FOR PRODUCING SAID ASSEMBLY
AGENCEMENT D'AUBES POUR UNE TURBINE À GAZ ET PROCÉDÉ DE FABRICATION D'AGENCEMENT D'AUBES

(30) Priorität: 06.07.2018 DE 102018211158
(43) Veröffentlichungstag der Anmeldung: 08.01.2020
(73) Patentinhaber: MTU Aero Engines AG, 80995 München (DE)
(72) Erfinder: Stiehler, Frank, 04924 Bad Liebenwerda (DE); Schellhorn, Lars, 07318 Saalfeld (DE)

(56) Entgegenhaltungen:
- FR-A1- 3 052 182
- US-A1- 2016 214 211
- US-A1- 2017 101 871
- US-B1- 6 375 420

## Beschreibung

Die vorliegende Erfindung betrifft ein Verfahren zum Herstellen einer Schaufelanordnung für eine Gasturbine, eine nach dem Verfahren hergestellte Schaufelanordnung sowie eine Gasturbine mit der Schaufelanordnung.

Schaufelblätter von Leit- und Laufschaufeln von Gasturbinen erfahren im Betrieb, insbesondere aufgrund von mechanischen und aerodynamischen Kräften, häufig eine elastische Torsion aus einer Referenzlage um eine radiale bzw. Fädelachse.

Eine solche Torsion beeinflusst maßgeblich die aerodynamische Performance der Schaufel, da sich hierdurch die Strömungsverhältnisse, insbesondere An- bzw. Abströmwinkel, gegenüber der Referenzlage verändern.

Eine Aufgabe einer Ausführung der vorliegenden Erfindung ist es, eine Gasturbine, insbesondere deren Herstellung und/oder Betrieb, zu verbessern Dokumente US 2016/214211 A1, US 6 375 420 B1, US 2017/101871 A1, und FR 3 052 182 A1 beziehen sich auf Schaufeln, deren Geometrien, ihre Herstellungsverfahren und Verdrehung ihrer Querschnitte entlang ihrer Radialerstreckung.

Diese Aufgabe wird durch ein Verfahren mit den Merkmalen des Anspruchs 1 gelöst. Ansprüche 6, 7 stellen eine nach einem hier beschriebenen Verfahren hergestellte Schaufelanordnung bzw. eine Gasturbine mit der Schaufelanordnung unter Schutz. Vorteilhafte Ausführungsformen der Erfindung sind Gegenstand der Unteransprüche. Nach einer Ausführung der vorliegenden Erfindung weist eine Gasturbine, insbesondere eine Flugtriebwerk-Gasturbine, eine oder mehrere Verdichterstufen und/oder eine oder mehrere Turbinenstufen mit (je) einem oder mehreren Leitgittern und/oder einem oder mehreren Laufgittern mit (je) einem oder mehreren hohlen Schaufelblättern auf.

Dabei können Schaufelblätter (jeweils) einzeln oder zwei oder mehr Schaufelblätter (jeweils) gemeinsam bzw. integral miteinander hergestellt sein, insbesondere als Einzelschaufeln bzw. Schaufelcluster, BLISKs oder dergleichen. Entsprechend kann in einer Ausführung eine Schaufelanordnung im Sinne der vorliegenden Erfindung ein Schaufelblatt bzw. die Schaufelblätter einer oder mehrerer (hohler) Laufschaufeln oder ein Schaufelblatt bzw. die Schaufelblätter einer oder mehrerer (hohler) Leitschaufeln einer Verdichterstufe oder einer Turbinenstufe einer bzw. der Gasturbine aufweisen, insbesondere hieraus bestehen.

Ein hohles Schaufelblatt im Sinne der vorliegenden Erfindung weist in einer Ausführung eine Außenwandung mit einer Druck- und einer Saugseite, die in einer Vorder- und einer Hinterkante miteinander verbunden sind bzw. ineinander übergehen, sowie einen von dieser Außenwandung vollständig oder teilweise umschlossenen Innenraum auf, der in einer Weiterbildung leer, in einer anderen Weiterbildung teilweise oder vollständig mit einer, insbesondere makroskopischen, Innenstruktur, insbesondere Streben, Gitter oder dergleichen, gefüllt sein kann, insbesondere mit einer sogenannten Lattice-Struktur, es kann insbesondere hieraus bestehen.

Nach einer Ausführung der vorliegenden Erfindung werden zum Herstellen einer solchen Schaufelanordnung mit wenigstens einem (ersten) hohlen Schaufelblatt für eine bzw. die bzw. einer bzw. der Gasturbine Profilquerschnitte dieses Schaufelblatts auf Basis einer vorgegebenen Soll-Torsion dieses Schaufelblatts, insbesondere mit der Maßgabe, dass dieses Schaufelblatt die vorgegebene Soll-Torsion aufweist bzw. eine Abweichung hiervon möglichst gering ist, konfiguriert, insbesondere konstruiert, ausgelegt und/oder dimensioniert, und das Schaufelblatt auf Basis dieser konfigurierten Profilquerschnitte mithilfe eines additiven Fertigungsverfahrens hergestellt.

In einer Ausführung werden zum Herstellen einer Schaufelanordnung mit dem einen bzw. ersten Schaufelblatt und einem oder mehreren weiteren hohlen Schaufelblättern für eine bzw. die bzw. einer bzw. der Gasturbine auch Profilquerschnitte dieses weiteren Schaufelblatts bzw. dieser weiteren Schaufelblätter auf Basis einer vorgegebenen Soll-Torsion dieses weitere Schaufelblatts bzw. dieser weiteren Schaufelblätter, insbesondere mit der Maßgabe, dass dieses weiteren Schaufelblatt bzw. diese weiteren Schaufelblätter die (jeweils hierfür) vorgegebene Soll-Torsion aufweist/aufweisen bzw. eine Abweichung hiervon möglichst gering ist, konfiguriert, insbesondere konstruiert, ausgelegt und/oder dimensioniert, und das eine bzw. erste Schaufelblatt und dieses weitere Schaufelblatt bzw. diese weiteren Schaufelblätter auf Basis dieser konfigurierten Profilquerschnitte mithilfe eines additiven Fertigungsverfahrens gemeinsam hergestellt.

Dem liegt die Idee zugrunde, durch entsprechende Konfiguration von Profilquerschnitten des Schaufelblatts bzw. der Schaufelblätter in wenigstens einem Betriebspunkt möglichst eine gewünschte Soll-Torsion zu realisieren, wobei das additive Fertigungsverfahren eine präzise Realisierung der konfigurierten Profilquerschnitte und insbesondere einen kontinuierlichen Übergang zwischen aufeinanderfolgenden, unterschiedlich konfigurierten Profilquerschnitten ermöglicht.

Ein Profilquerschnitt ist in einer Ausführung (ein Querschnitt) senkrecht zu einer Radialrichtung und/oder Fädelachse der Hohlschaufel, wobei in fachüblicher Weise eine Axialrichtung parallel zu einer Dreh- bzw. (Haupt)Maschinenachse der Gasturbine, eine Umfangsrichtung eine Rotationsrichtung um diese Achse und eine Radialrichtung senkrecht zur Axialrichtung und Umfangsrichtung ist.

Unter einer (Soll-)Torsion wird vorliegend insbesondere eine, vorzugsweise elastische, Verdrehung von Profilquerschnitten des Schaufelblatts um die Radialrichtung bzw. Fädelachse, im Betrieb gegenüber einer Einbaulage bei unbetriebener Gasturbine oder gegenüber einer, insbesondere unverformten, Referenzlage verstanden. Sie ergibt sich in einer Ausführung als Differenz zwischen der Einbau- bzw. Referenzlage und einer gewünschten Soll-Lage, insbesondere einem Soll-Schaufel(ein- oder austritts)- oder Staffelungswinkel, des jeweiligen Profilquerschnitts in (wenigstens) einem bzw. für (wenigstens) einen Betriebspunkt, insbesondere dem bzw. den ADP der Schaufel bzw. Gasturbine. Die Soll-Torsion kann, wenigstens abschnittsweise, das Schaufelblatt stärker anstellen bzw. den sogenannten Twist bzw. die Verdrillung verstärken oder auch zurück zur Axialrichtung stellen bzw. Twist bzw. Verdrillung reduzieren ("Untwist"). Somit kann in einer Ausführung die Soll-Torsion durch eine vorgegebene Soll-Lage der Profilquerschnitte in dem wenigstens einen Betriebspunkt, insbesondere ADP, und eine Einbaulage bei unbetriebener Gasturbine oder durch eine vorgegebene Soll-Lage der Profilquerschnitte in dem wenigstens einen Betriebspunkt, insbesondere ADP, und einer, insbesondere unverformten, Referenzlage vorgegeben sein bzw. werden, insbesondere also durch einen Soll-Twist in dem wenigstens einen Betriebspunkt.

Die Soll-Torsion bzw. der Soll-Twist variiert in einer Ausführung wenigstens abschnittsweise über die radiale Höhe des Schaufelblatts bzw. zwischen aufeinanderfolgenden Profilquerschnitten, in einer Weiterbildung kontinuierlich bzw. stetig, insbesondere stetig differenzierbar. Hierdurch kann in einer Ausführung die aerodynamische Performance verbessert werden. Entsprechend umfasst in einer Ausführung die Soll-Torsion eines Schaufelblatts die Soll-Torsion mehrerer seiner, insbesondere aufeinanderfolgender, Profilquerschnitte, insbesondere also einen, in einer Ausführung kontinuierlichen bzw. stetigen, insbesondere stetig differenzierbaren, variierenden, Soll-Twistverlauf über wenigstens einen Abschnitt seiner radialen Erstreckung, in einer Ausführung über bzw. längs der gesamten radialen Höhe des Schaufelblattes.

Das additive bzw. generative Fertigungsverfahren umfasst in einer Ausführung das schichtweise lokale Verfestigen und/oder Verbinden von losem, insbesondere flüssigem und/oder pulverförmigem, Ausgangsmaterial, insbesondere auf Basis eines (Computer)Modells der (herzustellenden) Schaufelanordnung. Dabei kann in einer Ausführung die gesamte Schaufelanordnung additiv hergestellt werden bzw. sein. Gleichermaßen kann in einer anderen Ausführung ein Teil der Schaufelanordnung, insbesondere wenigstens ihr Schaufelblatt bzw. ihre Schaufelblätter oder ein Teil von dem bzw. einem oder mehreren der Schaufelblätter, additiv hergestellt werden bzw. sein, und der Rest der Schaufelanordnung, insbesondere ein Außen- und/oder Innendeckband, ein Schaufelfuß oder dergleichen, auf andere Weise, insbesondere ur- und/oder umgeformt, wobei eine additive Herstellung der kompletten Schaufelanordnung fertigungs- und/oder festigkeitstechnisch vorteilhaft sein kann. In einer Ausführung weist die Schaufelanordnung wenigstens einen Schaufelfuß zur zerstörungsfrei lösbaren Befestigung und/oder wenigstens ein Deckband, insbesondere ein Innen- und/oder ein Außendeckband, auf. Gleichermaßen kann die Schaufelanordnung außendeckbandlos sein.

Das additive Fertigungsverfahren ist in einer Ausführung ein Pulverbettverfahren, insbesondere selektives Laserschmelzen (SLM), selektives Lasersintern (SLS), Selective Heat Sintering (SHS), Binder Jetting (Verfestigen von Pulvermaterial mittels Binder), Elektronenstrahlschmelzen (Electron Beam Melting = EBM), Fused Deposition Modeling (FDM) bzw. Fused Filament Fabrication (FFF)), Elektronenstrahlschmelzen (Electron Beam Welding = EBW) oder Stereolithografie ((Mikro-)SLA).

In einer Ausführung werden die Profilquerschnitte des einen bzw. ersten Schaufelblatts und die Profilquerschnitte des weiteren Schaufelblatts bzw. eines oder mehrerer der weiteren Schaufelblätter wenigstens abschnittsweise unterschiedlich konfiguriert, um diese Schaufelblätter gegeneinander zu verstimmen, insbesondere also derart bzw. mit der Maßgabe, dass das eine bzw. erste Schaufelblatt und das wenigstens eine weitere Schaufelblatt unterschiedliche Eigenformen bzw. -frequenzen aufweisen.

Hierdurch können in einer Ausführung vorteilhaft Vibrationen reduziert werden.

Die Torsion von Profilquerschnitten wird maßgeblich durch ihre Torsionssteifigkeit, die durch dynamische Lasten bewirkte Torsion maßgeblich durch ihre Flächenträgheitsmomente um die Radialrichtung bzw. Fädelachse bestimmt.

Daher werden in einer Ausführung zwei oder mehr radial voneinander beabstandete Profilquerschnitte des einen bzw. ersten Schaufelblatts und/oder des weiteren Schaufelblatts bzw. eines oder mehrerer der weiteren Schaufelblätter (jeweils) auf Basis der vorgegebenen Soll-Torsion des (jeweiligen) Schaufelblatts mit unterschiedlichen Flächenträgheitsmomenten und/oder Torsionssteifigkeiten und/oder Widerstandsmomenten um die Radialrichtung bzw. Fädelachse konfiguriert und hergestellt. Mit anderen Worten variiert in einer Ausführung das Flächenträgheitsmoment und/oder die Torsionssteifigkeit um die Radialrichtung bzw. Fädelachse bei dem einen bzw. ersten Schaufelblatt zwischen voneinander beabstandeten, insbesondere aufeinanderfolgenden, Profilquerschnitten, insbesondere wenigstens abschnittsweise, über die radiale Höhe dieses Schaufelblatts, in einer Ausführung kontinuierlich bzw. stetig, insbesondere stetig differenzierbar bzw. weist das eine bzw. erste Schaufelblatt wenigstens abschnittsweise einen, insbesondere kontinuierlichen bzw. stetigen, insbesondere stetig differenzierbaren, variierenden Verlauf seines Flächenträgheitsmoments und/oder seine Torsionssteifigkeit auf. Zusätzlich oder alternativ variiert in einer Ausführung das Flächenträgheitsmoment und/oder die Torsionssteifigkeit und/oder das Widerstandsmoment um die Radialrichtung bzw. Fädelachse bei dem wenigstens einen weiteren Schaufelblatt zwischen voneinander beabstandeten, insbesondere aufeinanderfolgenden, Profilquerschnitten, insbesondere wenigstens abschnittsweise, über die radiale Höhe dieses Schaufelblatts, in einer Ausführung kontinuierlich bzw. stetig, insbesondere stetig differenzierbar bzw. weist das wenigstens eine weitere Schaufelblatt wenigstens abschnittsweise einen, insbesondere kontinuierlichen bzw. stetigen, insbesondere stetig differenzierbaren, variierenden Verlauf seines Flächenträgheitsmoments und/oder seine Torsionssteifigkeit auf.

Hierdurch kann die Soll-Torsion besonders vorteilhaft, insbesondere einfach und/oder zuverlässig, realisiert werden.

Sowohl die Torsionssteifigkeit als auch das Flächenträgheitsmoment und das Widerstandsmoment eines Profilquerschnitts um die Radialrichtung bzw. Fädelachse wird maßgeblich durch seine Außenwandstärke und Innenstruktur bestimmt.

Daher werden in einer Ausführung zwei oder mehr radial voneinander beabstandete Profilquerschnitte des einen bzw. ersten Schaufelblatts und/oder des weiteren Schaufelblatts bzw. eines oder mehrerer der weiteren Schaufelblätter (jeweils) auf Basis der vorgegebenen Soll-Torsion des (jeweiligen) Schaufelblatts mit unterschiedlichen, insbesondere maximalen, minimalen und/oder mittleren, Außenwandstärken, insbesondere Außenwandstärkenverteilungen bzw. -läufen längs des Profils bzw. seiner Profilsehne, und/oder, insbesondere makroskopischen, Innenstrukturen, insbesondere Verstrebungen unterschiedlicher Anzahl, Wandstärke und/oder Form, konfiguriert und hergestellt. Mit anderen Worten variiert in einer Ausführung die, insbesondere makroskopische, Innenstruktur, insbesondere in Anzahl, Wandstärke und/oder Form ihrer Verstrebungen, und/oder die, insbesondere maximale, minimale und/oder mittlere Außenwandstärke, insbesondere Außenwandstärkenverteilung, bei dem einen bzw. ersten Schaufelblatt zwischen voneinander beabstandeten, insbesondere aufeinanderfolgenden, Profilquerschnitten, insbesondere wenigstens abschnittsweise, über die radiale Höhe dieses Schaufelblatts, in einer Ausführung kontinuierlich bzw. stetig, insbesondere stetig differenzierbar. Zusätzlich oder alternativ variiert in einer Ausführung die, insbesondere makroskopische, Innenstruktur, insbesondere in Anzahl, Wandstärke und/oder Form ihrer Verstrebungen, und/oder die, insbesondere maximale, minimale und/oder mittlere Außenwandstärke, insbesondere Außenwandstärkenverteilung, bei dem wenigstens einen weiteren Schaufelblatt zwischen voneinander beabstandeten, insbesondere aufeinanderfolgenden, Profilquerschnitten, insbesondere wenigstens abschnittsweise, über die radiale Höhe dieses Schaufelblatts, in einer Ausführung kontinuierlich bzw. stetig, insbesondere stetig differenzierbar.

Hierdurch kann die Soll-Torsion besonders vorteilhaft, insbesondere einfach und/oder zuverlässig, realisiert werden.

In einer Ausführung werden ein oder mehrere, insbesondere alle, Schritte des Verfahrens vollständig oder teilweise automatisiert durchgeführt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: ein Verfahren zum Herstellen einer Schaufelanordnung nach einer Ausführung der vorliegenden Erfindung;
- Fig. 2:: ein hohles Schaufelblatt der Schaufelanordnung in einer Draufsicht in Umfangsrichtung;
- Fig. 3:: ein weiteres hohles Schaufelblatt der Schaufelanordnung in einer Draufsicht in Umfangsrichtung; und
- Fig. 4-6:: Profilschnitte der Schaufelblätter.

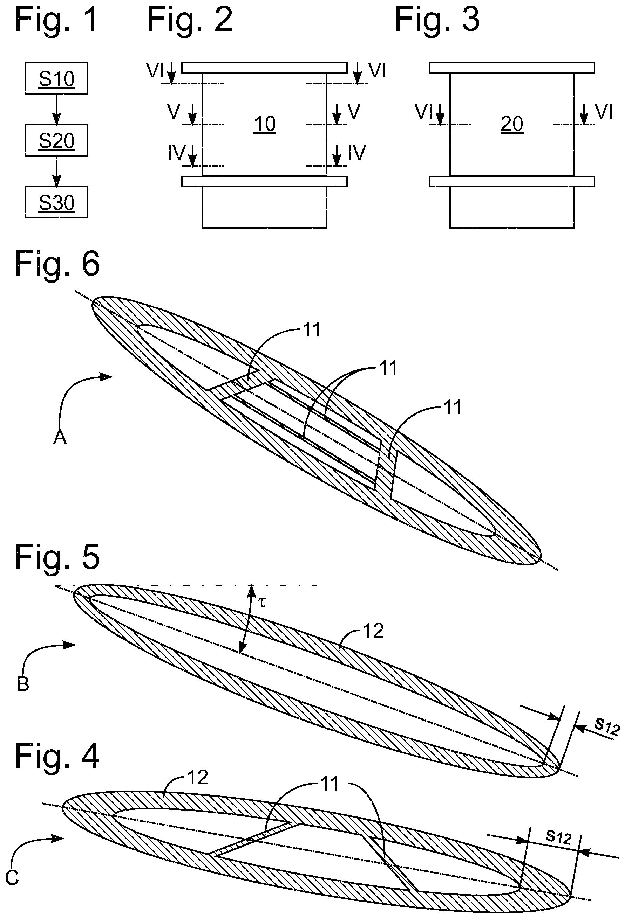

Fig. 1 zeigt ein Verfahren zum Herstellen einer Schaufelanordnung nach einer Ausführung der vorliegenden Erfindung, die aus einem (ersten) hohlen Schaufelblatt 10 (vgl. Fig. 2) besteht oder auch zusätzlich wenigstens ein weiteres hohles Schaufelblatt 20 (vgl. Fig. 3) aufweisen kann.

In einem ersten Schritt S10 wird für das Schaufelblatt bzw. eines oder mehrere der Schaufelblätter (jeweils) eine Soll-Torsion vorgegeben.

In einem zweiten Schritt S20 werden Profilquerschnitte des Schaufelblatts bzw. der Schaufelblätter so bzw. mit der Maßgabe konfiguriert, dass es bzw. sie im ADP diese Soll-Torsion aufweist/aufweisen.

In einem dritten Schritt S30 wird/werden das Schaufelblatt bzw. die Schaufelblätter auf Basis des bzw. der bzw. mit dem bzw. den konfigurierten Profilquerschnitt(en) mithilfe eines additiven Fertigungsverfahrens (gemeinsam) hergestellt, in einer Ausführung zusammen mit einem Schaufelfuß, Innen- und gegebenenfalls Außendeckband.

Fig. 2 zeigt das Schaufelblatt 10 in einer Draufsicht in Umfangsrichtung, Fig. 4-6 drei Profilquerschnitte A, B bzw. C des Schaufelsblatts längs der Linien IV-IV, V-V bzw. VI-VI in Fig. 2.

Exemplarisch unterscheiden sich diese drei Profilquerschnitte in den Wandstärken ihrer Außenwandungen 12 sowie in Anzahl, Wandstärke und Form ihrer Verstrebungen. Exemplarisch sind hierzu in Fig. 5, 6 Außenwandstärken s₁₂ und in Fig. 4-6 unterschiedliche Verstrebungen 11 angedeutet.

Die Profilquerschnitte beider Schaufelblätter 10, 20 werden wenigstens abschnittsweise unterschiedlich konfiguriert, um die beiden Schaufelblätter gegeneinander zu verstimmen.

Exemplarisch ist hierzu der Profilquerschnitt des weiteren Schaufelblatts 20 längs der Linien VI-VI von Fig. 3 in Fig. 6 gezeigt, die somit gleichermaßen den Profilquerschnitt des ersten Schaufelblatts 10 längs der Linien VI-VI in Fig. 2 und den Profilquerschnitt des weiteren Schaufelblatts 20 längs der Linien VI-VI in Fig. 3 zeigt, die lediglich zur kompakteren Darstellung im Ausführungsbeispiel identisch sind.

In Fig. 5 ist zudem ein Schaufelwinkel τ gegen die strichpunktiert angedeutete Axialrichtung eingezeichnet, der sich im ADP einstellt, da in diesem das Schaufelblatt 10 infolge seiner konfigurierten Profilquerschnitte die vorgegebene Soll-Torsion aufweist.

Obwohl in der vorhergehenden Beschreibung exemplarische Ausführungen erläutert wurden, sei daraufhingewiesen, dass eine Vielzahl von Abwandlungen möglich ist.

So kann insbesondere, wie bereits erwähnt, die Schaufelanordnung auch nur ein einziges Schaufelblatt, insbesondere das Schaufelblatt 10, aufweisen.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: erstes hohles Schaufelblatt
- 11: Verstrebung (Innenstruktur)
- 12: Außenwandung
- 20: zweites hohles Schaufelblatt

- A, B, C: Profilquerschnitt
- s₁₂: Außenwandstärke
- τ: Schaufelwinkel

## Patentansprüche

1. Verfahren zum Herstellen einer Schaufelanordnung mit wenigstens einem hohlen Schaufelblatt (10) für eine Gasturbine,
**dadurch gekennzeichnet,**
**dass** wenigstens zwei radial voneinander beabstandete Profilquerschnitte (A, B, C) des Schaufelblatts auf Basis einer vorgegebenen Soll-Torsion des Schaufelblatts konfiguriert werden (S20) und das Schaufelblatt auf Basis der konfigurierten Profilquerschnitte mithilfe eines additiven Fertigungsverfahrens hergestellt wird (S30), und dass die Profilquerschnitte des Schaufelblatts auf Basis der vorgegebenen Soll-Torsion mit unterschiedlichen Außenwandstärken (s12) und/oder makroskopischen Innenstrukturen, insbesondere Verstrebungen (11) unterschiedlicher Anzahl, Wandstärke und/oder Form, konfiguriert und hergestellt werden.

2. Verfahren nach dem vorhergehenden Anspruch, **dadurch gekennzeichnet, dass** die Schaufelanordnung wenigstens ein weiteres hohles Schaufelblatt (20) aufweist, wobei Profilquerschnitte (A) dieses weiteren Schaufelblatts auf Basis einer vorgegebenen Soll-Torsion dieses weiteren Schaufelblatts konfiguriert werden (S20) und das eine Schaufelblatt und das wenigstens eine weitere Schaufelblatt auf Basis der konfigurierten Profilquerschnitte mithilfe eines additiven Fertigungsverfahrens gemeinsam hergestellt werden (S30).

3. Verfahren nach dem vorhergehenden Anspruch, **dadurch gekennzeichnet, dass** die Profilquerschnitte des einen Schaufelblatts und die Profilquerschnitte des wenigstens einen weiteren Schaufelblatts wenigstens abschnittsweise unterschiedlich konfiguriert werden, um die beiden Schaufelblätter gegeneinander zu verstimmen.

4. Verfahren nach einem der vorhergehenden Ansprüche, **dadurch gekennzeichnet, dass** wenigstens zwei radial voneinander beabstandete Profilquerschnitte des einen Schaufelblatts und/oder wenigstens zwei radial voneinander beabstandete Profilquerschnitte des wenigstens einen weiteren Schaufelblatts auf Basis der vorgegebenen Soll-Torsion mit unterschiedlichen Flächenträgheitsmomenten und/oder Torsionssteifigkeiten und/oder Widerstandsmomenten konfiguriert und hergestellt werden.

5. Verfahren nach einem der vorhergehenden Ansprüche, **dadurch gekennzeichnet, dass** wenigstens zwei radial voneinander beabstandete Profilquerschnitte eines wenigstens einen weiteren Schaufelblatts auf Basis der vorgegebenen Soll-Torsion mit unterschiedlichen Außenwandstärken (s12) und/oder, insbesondere makroskopischen, Innenstrukturen, insbesondere Verstrebungen (11) unterschiedlicher Anzahl, Wandstärke und/oder Form, konfiguriert und hergestellt werden.

6. Verfahren nach einem der vorhergehenden Ansprüche, **dadurch gekennzeichnet, dass** eine Variation von einem ersten Profilquerschnitt auf einen, insbesondere benachbarten, von dem ersten Profilquerschnitt verschiedenen, zweiten Profilquerschnitt stetig verläuft.

7. Schaufelanordnung für eine Gasturbine, die nach einem Verfahren nach einem der vorhergehenden Ansprüche hergestellt ist.

8. Gasturbine, insbesondere Flugtriebwerk-Gasturbine, mit wenigstens einer Verdichter- und/oder Turbinenstufe mit wenigstens einem Leit- und/oder Laufgitter mit wenigstens einer Schaufelanordnung nach dem vorhergehenden Anspruch.

## Claims

1. Method for producing a blade assembly having at least one hollow airfoil (10) for a gas turbine, **characterized in that** at least two radially spaced profile cross sections (A, B, C) of the airfoil are configured (S20) on the basis of a predetermined desired torsion of the airfoil and the airfoil is produced (S30) on the basis of the configured profile cross sections by means of an additive manufacturing process, and **in that** the profile cross sections of the airfoil are configured and produced, on the basis of the predetermined desired torsion, so as to have different outerwall thicknesses (s12) and/or macroscopic inner structures, in particular struts (11) of different numbers, wall thicknesses and/or shapes.

2. Method according to the preceding claim, **characterized in that** the blade assembly has at least one further hollow airfoil (20), profile cross sections (A) of this further airfoil being configured (S20) on the basis of a predetermined desired torsion of this further airfoil, and the at least one airfoil and the at least one further airfoil being jointly produced (S30) on the basis of the configured profile cross sections by means of an additive manufacturing process.

3. Method according to the preceding claim, **characterized in that** the profile cross sections of the one airfoil and the profile cross sections of the at least one further airfoil are configured differently, at least in portions, in orderto detune the two airfoils from one another.

4. Method according to any of the preceding claims, **characterized in that** at least two radially spaced profile cross sections of the one airfoil and/or at least two radially spaced profile cross sections of the at least one further airfoil are configured and produced, on the basis of the predetermined desired torsion, so as to have different area moments of inertia and/or torsional rigidities and/or moments of resistance.

5. Method according to any of the preceding claims, **characterized in that** at least two radially spaced profile cross sections of at least one further airfoil are configured and produced, on the basis of the predetermined target torsion, so as to have different outer wall thicknesses (s12) and/or, in particular macroscopic, inner structures, in particular struts (11) of different numbers, wall thicknesses and/orshapes.

6. Method according to any of the preceding claims, **characterized in that** there is a continuous variation from a first profile cross section to an in particular adjacent second profile cross section that is different from the first profile cross-section.

7. Blade assembly for a gas turbine which is produced by a method according to any of the preceding claims.

8. Gas turbine, in particular aircraft engine gas turbine, comprising at least one compressor and/or turbine stage having at least one guide baffle and/or rotor cascade that has at least one blade assembly according to the preceding claim.

## Revendications

1. Procédé de fabrication d'un agencement d'aubes comportant au moins une pale d'aube creuse (10) destinée à une turbine à gaz,
**caractérisé en ce**
**qu'**au moins deux sections transversales de profil (A, B, C) de la pale d'aube, radialement espacées l'une de l'autre, sont conçues (S20) sur la base d'une torsion de consigne prédéterminée de la pale d'aube et que la pale d'aube est fabriquée (S30) à l'aide d'u n procédé de fabrication additive sur la base des sections transversales de profil conçues, et
**que** les sections transversales de profil de la pale d'aube sont conçues et fabriquées sur la base de la torsion de consigne prédéterminée avec différentes épaisseurs de paroi externe (s12) et/ou structures internes macroscopiques, en particulier des entretoises (11) de nombre, d'épaisseur de paroi et/ou de forme différents.

2. Procédé selon la revendication précédente, **caractérisé en ce que** l'agencement d'aubes présente au moins une autre pale d'aube creuse (20), des sections transversales de profil (A) de cette autre pale d'aube étant conçues (S20) sur la base d'une torsion de consigne prédéterminée de cette autre pale d'aube, et la première pale d'aube et l'au moins une autre pale d'aube étant fabriquées (S30) conjointement à l'aide d'un procédé de fabrication additive sur la base des sections transversales de profil conçues.

3. Procédé selon la revendication précédente, **caractérisé en ce que** les sections transversales de profil de la première pale d'aube et les sections transversales de profil de l'au moins une autre pale d'aube sont conçues différemment au moins sur certaines sections afin de désaccorder les deux pales d'aube l'une de l'autre.

4. Procédé selon l'une des revendications précédentes, **caractérisé en ce qu'**au moins deux sections transversales de profil de la première pale d'aube, radialement espacées l'une de l'autre, et/ou au moins deux sections transversales de profil de l'au moins une autre pale d'aube, radialement espacées l'une de l'autre, sont conçues et fabriquées sur la base de la torsion de consigne prédéterminée, avec des moments d'inertie de surface et/ou rigidités en torsion et/ou moments de résistance différents.

5. Procédé selon l'une des revendications précédentes, **caractérisé en ce qu'**au moins deux sections transversales de profil d'au moins une autre pale d'aube, radialement espacées l'une de l'autre, sont conçues et fabriquées sur la base de la torsion de consigne prédéterminée avec différentes épaisseurs de paroi externe (s12) et/ou structures internes, en particulier macroscopiques, en particulier des entretoises (11) de nombre, d'épaisseur de paroi et/ou de forme différents.

6. Procédé selon l'une des revendications précédentes, **caractérisé en ce qu'**une variation d'une première section transversale de profil s'étend en continu sur une seconde section transversale de profil, en particulier adjacente, différente de la première section transversale de profil.

7. Agencement d'aubes destiné à une turbine à gaz, lequel est fabriqué par un procédé selon l'une des revendications précédentes.

8. Turbine à gaz, en particulier turbine à gaz de moteur d'avion, comportant au moins un étage de compresseur et/ou de turbine comportant au moins une grille directrice et/ou mobile comportant au moins un agencement d'aubes selon la revendication précédente.
